**Europäisches Patentamt**

**European Patent Office**

**Office européen des brevets**

(19)

(11) Veröffentlichungsnummer : **0 353 605 B1**

# (12) EUROPÄISCHE PATENTSCHRIFT

(45) Veröffentlichungstag der Patentschrift :
**15.04.92 Patentblatt 92/16**

(51) Int. Cl.$^5$ : **C09K 3/32**

(21) Anmeldenummer : **89113749.9**

(22) Anmeldetag : **26.07.89**

(54) **Verwendung eines mineralischen Stoffes zum Aufsaugen von toxischen Flüssigkeiten, Emulsionen oder Suspensionen.**

(30) Priorität : **31.07.88 DE 3825905**

(43) Veröffentlichungstag der Anmeldung :
**07.02.90 Patentblatt 90/06**

(45) Bekanntmachung des Hinweises auf die Patenterteilung :
**15.04.92 Patentblatt 92/16**

(84) Benannte Vertragsstaaten :
**AT BE CH ES FR GB GR IT LI LU NL SE**

(56) Entgegenhaltungen :
**EP-A- 0 087 001**
**DE-A- 2 951 776**

(73) Patentinhaber : **Marx, Günther, Dr.**
**W-5431 Ruppach-Goldhausen (DE)**

(72) Erfinder : **Marx, Günther, Dr.**
**W-5431 Ruppach-Goldhausen (DE)**

(74) Vertreter : **Becker, Thomas, Dr., Dipl.-Ing. et al**
**Patentanwälte Becker & Müller**
**Eisenhüttenstrasse 2**
**W-4030 Ratingen 1 (DE)**

## Beschreibung

Es gibt zahlreiche Situationen, in denen insbesondere toxische Flüssigkeiten, Emulsionen und/oder Suspensionen plötzlich und unerwartet austreten und dann möglichst ebenso kurzfristig entsorgt werden müssen.

Nachstehend werden einige beispielhafte Anwendungsfälle aufgeführt:
– Auslaufen von Benzin, Öl oder anderen toxischen fluiden Substanzen bei einem Verkehrsunfall
– Austreten von Öl oder Fett bei der Leckage an einer Pumpe oder einem anderen Maschinenaggregat
– Auslaufen einer Flüssigkeit, Emulsion oder Suspension bei einem Rohrleitungsbruch
– Auslaufen von Heizöl aus einem Tank

Die Beispiele könnten beliebig erweitert werden und dienen hier lediglich zur Illustrierung einiger typischer Situationen, bei denen die in der Regel unplanmäßig austretenden Fluide entsorgt werden müssen (soweit nachstehend nicht gesondert erwähnt, umfaßt der Begriff Fluid dabei die eingangs genannten Flüssigkeiten, Emulsionen und Suspensionen).

Aus der DE 29 51 776 A1 ist ein poröses Adsorptionsmittel zur Aufnahme von Ölen und Fetten bekannt. Hierbei handelt es sich um ein gesintertes Produkt, bei dem das Porosierungsmittel zuvor ausgebrannt wurde. Anschließend wird das Adsorptionsmittel hydrophobiert. Die EP 0 087 001 A1 beschreibt dagegen ein ungebranntes Absorptionsmittel auf Tonmineralbasis mit einem Anteil an kompaktierten Tonmineralteilchen unter 2 mm Größe. Beide Mittel können nur wenig Schadstoffe ad- beziehungsweise absorbieren.

Bei größeren austretenden Fluidmengen können diese zum Teil abgepumpt werden. Die Restmengen, die nicht mehr abgepumpt werden können und die zum Teil erhebliche Mengen ausmachen, müssen auf andere Weise entsorgt werden. Üblicherweise wird dazu versucht, das jeweilige Fluid in ein anorganisches oder organisches Bindemittel einzubinden. Verschiedene organische Bindemittel weisen zwar relativ günstige Adsorptionseigenschaften auf, sind jedoch aufgrund krebserregender Bestandteile nicht verwendbar.

Zement als Beispiel für ein anorganisches Bindemittel weist zwar auch eine beträchtliche Saugfähigkeit auf, besitzt aber zwei wesentliche Nachteile: Es ist entweder ausschließlich pulverförmig oder besitzt hohe Feinkornanteile, die leicht verwehen. In Kontakt mit Wasser bindet der Zement relativ schnell zu einer irreversibel aushärtenden Masse ab, was die Beseitigung zusätzlich erschwert.

Überhaupt besteht der entscheidende Nachteil bekannter Bindemittel darin, daß sie sehr feinteilig sind. Die Feinteiligkeit resultiert aus der Forderung, eine größtmögliche Adsorptionsfläche zur Verfügung zu stellen, hat aber den beschriebenen Nachteil, daß das Material relativ leicht verweht und insoweit häufig nur zu einem Teil zum Aufsaugen des Fluids genutzt werden kann.

Der Erfindung liegt insoweit die Aufgabe zugrunde, eine Möglichkeit aufzuzeigen, wie toxische Flüssigkeiten, Emulsionen und/oder Suspensionen leicht, sicher und vollständig aufgesaugt und entsorgt werden können unter Beseitigung der Nachteile der bekannten Bindemittel nach dem Stand der Technik.

Der Erfindung liegt die Erkenntnis zugrunde, daß die geforderten Kriterien ein "Bindemittel" auf der Basis von Ton und/oder Tonmineralen erfüllen kann, wenn dieser mineralische Stoff auf bestimmte Weise aufbereitet und mit bestimmten physikalischen Eigenschaften ausgestattet ist.

In diesem Zusammenhang hat die Erfindung weiter erkannt, daß es bei der entsprechenden Aufbereitung des mineralischen Stoffes besonders darauf ankommt, das Porenvolumen durch entsprechende Führung des Brennprozesses und/oder Zusatzstoffe im Sinne einer möglichst hohen offenen Porosität zu beeinflussen und dabei so vorzugehen, daß die kapillare Saugkraft der gebildeten Poren optimiert wird.

Die Erfindung sieht dazu in ihrer allgemeinsten Ausführungsform die Verwendung eines mineralischen Stoffes auf der Basis von Ton und/oder Tonmineralen aus der Gruppe Kaolinit, Illit, Serizit und/oder Smektit vor, wobei der Stoff bei Temperaturen oberhalb 650 Grad Celsius, jedoch unterhalb der Sintertemperatur gebrannt worden ist und der eine offene Porosität von mindestens 30 Volumenprozent, vorzugsweise 50 bis 80 Volumenprozent und eine mittlere Porengröße von 0,05 bis 500 µm aufweist, zum Aufsaugen von toxischen Flüssigkeiten, Emulsionen und Suspensionen.

Dabei kann das Porenvolumen auf verschiedene Art und Weise zu den genannten Werten eingestellt werden. Eine Maßnahme besteht darin, die Tonminerale vor der weiteren Verarbeitung anzufeuchten, und zwar vorzugsweise auf eine Konsistenz, bei der die Masse plastisch verformbar ist. In der Regel wird dies bei einem Feuchtigkeitsgehalt zwischen 20 und 25 Gewichtsprozent erreicht. Dabei kommt es gleichzeitig zu einer Aufweitung der Tonmineralgitter und zu einer Dispersion der einzelnen Tonmineralteilchen, wodurch bereits einerseits die aktiven Oberflächen vergrößert werden und andererseits die Tonmineralgitter auf ein solches Maß aufgeweitet werden können, daß sie in erhöhtem Umfang anschließend in der Lage sind, Schadstoffe (Schadstoffionen) aufzunehmen und in die Gitterstruktur einzubinden.

Durch Zugabe entsprechender Aktivierungsstoffe wie Soda kann diese Einflußnahme weiter optimiert werden.

EP 0 353 605 B1

Auch der Zusatz der bereits genannten Porosierungsstoffe dient zur Erhöhung des Anteiles offener Porosität, allerdings nur im Zusammenhang mit dem weiteren wichtigen Merkmal der Erfindung, nach dem der mineralische Stoff anschließend unterhalb der Sintertemperatur aber oberhalb etwa 650 Grad Celsius gebrannt werden soll. Diesem Merkmal liegt die Erkenntnis zugrunde, daß ein Tonmineral wie Smektit bei der Erhitzung zunächst entwässert und der Zerfall der Tonminerale erst etwa bei 650 Grad Celsius beginnt, wo die Tonmineralstruktur zerstört wird. Wird der Brennprozeß dann unterhalb der Sintertemperatur von etwa 1200 Grad Celsius beendet, wird das bis dahin gebildete offene Porenvolumen erhalten und sintert nicht wieder zusammen.

Nach einer bevorzugten Ausführungsform der Erfindung soll der gebrannte mineralische Stoff anschließend gebrochen und in einer Korngröße zwischen 0,5 und 10 mm verwendet werden. Dieses Kornspektrum hat sich als besonders vorteilhaft erwiesen, weil die einzelnen Teilchen jetzt ein gewisses Eigengewicht mitbringen. Hierdurch wird verhindert, daß die Teilchen zum Beispiel nach Aufschütten auf eine Straßendecke, auf der zuvor Öl ausgelaufen ist, verwehen und es kann praktisch die gesamte Masse anschließend genutzt werden, um das Öl aufzusaugen.

Aufgrund der eingestellten Porengröße zwischen 0,05 bis 500 μm weist das Material eine besonders hohe kapillare Saugkraft auf und kann damit in sehr viel kürzerer Zeit und mit sehr viel höherem Wirkungsgrad das Öl aufsaugen und innerhalb der Poren einbinden beziehungsweise festhalten.

Versuche haben gezeigt, daß zum Beispiel das durch einen Verkehrsunfall ausgelaufene Heizöl bei Einsatz des erfindungsgemäßen mineralischen Stoffes praktisch vollständig innerhalb kürzester Zeit rückstandsfrei aufgesaugt werden kann und das mit dem Öl beladene Material kann anschließend ebenso schnell zusammengekehrt und abtransportiert werden. Durch die praktisch rückstandsfreie, vollständige Aufnahme des zu entsorgenden Stoffes kann durch die Verwendung des beschriebenen Mittels die Unfallstelle danach sehr viel frühzeitiger wieder dem Verkehr übergeben werden als bisher.

Im Stand der Technik sind zwar verschiedene Produkte bekannt, die ebenfalls ein sehr großes Porenvolumen aufweisen. Hierzu zählen zum Beispiele Blähtone oder Feuerleichtsteine. Bei diesen wurden bisher mit Porosierungsstoffen allerdings im wesentlichen geschlossene Poren erzeugt und etwa an der Oberfläche von Formteilen entstehende offene Poren wurden vielfach durch gesonderte Mittel verschlossen (versiegelt). Demgegenüber wird bei dem erfindungsgemäßen mineralischen Stoff das Augenmerk auf einen möglichst großen Anteil offener, also mit der Oberfläche in Verbindung stehender Poren Wert gelegt, um die erwünschte Vergrößerung und Stabilisierung der wirksamen Oberfläche zu erreichen.

Weitere Merkmale der Erfindung ergeben sich aus den Merkmalen der Unteransprüche.

So wird unter anderem vorgeschlagen, ein Material zu verwenden, das bei bestimmten Brenntemperaturen wie 650 Grad Celsius, 750 Grad Celsius, 850 Grad Celsius, 950 Grad Celsius, 1050 Grad Celsius oder 1150 Grad Celsius gebrannt wurde. Im einzelnen wird die Brenntempertur anhand der jeweils verwendeten Tone/Tonminerale und den gewünschten physikalischen Eigenschaften bestimmt. Offenbar entstehen nämlich bei den verschiedenen Brennstufen jeweils andere Oxide mit katalytischen Eigenschaften und jeweils unterschiedlicher chemischer Reaktionsfähigkeit. Weiterhin entstehen mit steigender Brenntemperatur ein weiter freigelegtes $SiO_4$-Tetraedersystem, bei dem sich die Zahl unabgesättigter Tetraeder mit steigender Brenntemperatur ändert und/oder teilweise zersetzte und/oder umgewandelte Tonmineralkomplexe (Skelette) ("Metakaolin"), die eine sehr hohe Reaktionsfähigkeit aufweisen. Hierdurch lassen sich anwendungsspezifische Eigenschaften einstellen.

Das genannte Porosierungsmittel kann beispielsweise aus Sägemehl, Papier(schlamm), Reisschalen, Schaumkunststoff, Korkmehl und/oder niedrig kalziniertem Ton bestehen.

Zur Bildung der gewünschten offenen Poren wird vorzugsweise ein "langsamer", also schonender Brand durchgeführt, bei dem das Porosierungsmittel verhältnismäßig langsam verbrennt und die bei dieser Verbrennung entstehenden Gase zu einer allmählichen Ausformung verhältnismäßig kleiner, offener und statistisch verteilter Poren führen.

Das Porosierungsmittel, seine Zugabemenge (in der Regel zwischen 5 und 30 Gewichtsprozent) sowie die jeweilige Brennkurve werden dabei so eingestellt beziehungsweise geführt, damit das Endprodukt schließlich die eingangs genannten Porengrößen mit optimierter kapillarer Saugkraft aufweisen.

Der Anteil an Porosierungsmittel hängt dabei auch von dem spezifischen Gewicht der einzelnen Mittel ab und während für das relativ schwere Sägemehl beispielsweise eher ein Anteil von 20 Gewichtsprozent gilt, genügen bei Verwendung von Reisschalen oder Schaumkunststoffen teilweise schon 5 Gewichtsprozent im Sinne der Erfindung. Auch Aluminium kommt als Porosierungsmittel infrage.

Der mineralische Stoff kann nach einer weiteren Ausführungsform der Erfindung auch eine katalytisch wirksame Substanz enthalten. Diese katalytische Substanz kann, sofern sie nicht bereits im Rohstoff enthalten ist, und falls dies mit dem Brennprozeß zur Herstellung der offenen Poren verträglich ist, bereits bei der Aufbereitung zugefügt werden, etwa durch Beimengung in feiner Verteilung zu dem Porosierungsmittel, was gleichzeitig noch die vorteilhafte Wirkung hat, daß die katalytisch wirkende Substanz gezielt dort, wo jeweils Poren gebildet werden, zur Verfügung gestellt wird. In anderen Fällen kann die katalytisch wirksame Substanz aber auch durch nachfolgenden Niederschlag, beispielsweise in gasförmiger Form, oder als Lösung dem erfindungsgemäßen Stoff zugesetzt werden; der hohe Anteil offener Poren führt zu einer sehr großen und damit wirksamen katalytisch aktiven Oberfläche. Ebenso kann sie aber bereits Bestandteil des Ausgangsmaterials auf Ton- oder Tonmineralbasis sein. Die katalytisch wirksame Substanz ist vorteilhafterweise ebenfalls ein mineralisches Naturprodukt wie Smektit, Magnetit, Hämatit, Anatas, Rutil oder Goethit. Auch Spurenelemente, Schwermetalle, Schwermetallkomplexe oder dergleichen können dem mineralischen Stoff zugegeben werden, sofern diese nicht in ihm bereits rohstoffmäßig enthalten sind.

Es kann angenommen werden, daß die katalytisch wirksamen Substanzen sowie die Spurenelemente eine katalytische Aufoxidation verschiedener Schadstoffe, insbesondere von Schwefel- und Stickstoffverbindungen ermöglichen und insoweit der mineralische Stoff auch eine absorptive Wirkung beim Aufsaugen der toxischen Flüssigkeiten, Emulsionen und Suspensionen ermöglicht.

Schließlich wird auch noch die Verwendung eines mineralischen Stoffes vorgeschlagen, dem bei der Aufbereitung Zusätze wie Vulkangestein, mergeliger Kalkstein, Kalkmergel, Mergel, Tonmergel, mergeliger Ton, Zeolith und/oder Dolomit beigemischt wurden, die offenbar die Wirksamkeit des gebrannten mineralischen Produktes im Hinblick auf die Anlagerung beziehungsweise Bindung bestimmter Schadstoffe zusätzlich fördern.

Die Vorteile des erfindungsgemäßen "Bindemittels" werden nachstehend noch einmal kurz zusammengefaßt:

– es weist aufgrund seiner speziellen Porenstruktur eine besonders hohe kapillare Saugfähigkeit auf

– dadurch, daß es sich um ein gebranntes Material handelt, ist es trittsicher und abriebfest

– im Gegensatz zu Zement oder dergleichen ist das in Kornfraktionen von vorzugsweise 0,5 bis 10 mm ausgebrachte Material praktisch staubfrei

– das Material besteht ausschließlich aus natürlichen Rohstoffen und ist damit umweltfreundlich und enthält keine krebserregenden oder sonstigen schädlichen Substanzen

– es kann nach Adsorption des jeweiligen Fluids leicht zusammengekehrt und abtransportiert sowie anschließend entsorgt werden, zum Beispiel durch Verbrennung oder Regenerierung (zum Beispiel Erhitzen).

– es unterliegt praktisch keinen Alterungsverlusten, da das Material gebrannt ist

– durch bestimmte Zusätze kann das Material dem jeweiligen Anwendungsbereich individuell angepaßt werden.

– es kann bei Einstellung einer entsprechenden Kornfraktion auch zum Aufsaugen von Öl auf Wasseroberflächen, zum Beispiel nach einem Tankerunfall, Verwendung finden

– das Material weist ein geringes Schüttgewicht zwischen 0,5 und 1,0 g/cm³ je nach Porenvolumen und Korngrößenverteilung auf.

Natürlich läßt sich das Material - falls gewünscht - auch zur Adsorption nicht-toxischer Fluide verwenden.


## Patentansprüche

1. Verwendung eines mineralischen Stoffes mit den nachfolgenden Merkmalen zum Aufsaugen von toxischen Flüssigkeiten, Emulsionen und Suspensionen:

1.1 der mineralische Stoff besteht aus Ton und/oder Tonmineralen aus der Gruppe Kaolinit, Illit, Serizit und-/oder Smektit

1.2 der Stoff ist bei Temperaturen oberhalb 650 Grad Celsius, jedoch unterhalb der Sintertemperatur gebrannt worden

1.3 der Stoff weist eine offene Porosität von mindestens 30 Volumenprozent, vorzugsweise 50 bis 80 Volumenprozent auf

1.4 die mittlere Porengröße beträgt zwischen 0,05 und 500 µm.

2. Verwendung nach Anspruch 1 mit der Maßgabe, daß dem mineralischen Stoff vor dem Brennen ein Porosierungsmittel zugegeben wurde.

3. Verwendung nach Anspruch 2 mit der Maßgabe, daß das Porosierungsmittel aus Sägemehl, Aluminium, Papier(schlamm), Reisschalen, Schaumkunststoff, Korkmehl und/oder niedrig kalziniertem Ton besteht.

4. Verwendung nach Anspruch 2 oder 3 mit der Maßgabe, daß das Porosierungsmittel in einem Anteil zwischen 5 und 30 Gewichtsprozent zugegeben wurde.

5. Verwendung nach einem der Ansprüche 1 bis 4 mit der Maßgabe, daß der mineralische Stoff in einer Kornfraktion zwischen 0,5 und 10 mm vorliegt.

6. Verwendung nach Anspruch 5 mit der Maßgabe, daß der mineralische Stoff in einer Kornfraktion zwischen 1 und 8 mm vorliegt.

7. Verwendung nach einem der Ansprüche 1 bis 6 mit der Maßgabe, daß der mineralische Stoff bei etwa 650 Grad Celsius, 750 Grad Celsius, 850 Grad Celsius, 950 Grad Celsius, 1050 Grad Celsius oder 1150 Grad Celsius gebrannt wurde.

8. Verwendung nach einem der Ansprüche 1 bis 7 mit der Maßgabe, daß ein mineralischer Stoff verwendet wird, der zumindest eine katalytisch wirksame Substanz enthält oder diese dem Stoff zugegeben wurde.

9. Verwendung nach Anspruch 8 mit der Maßgabe, daß die katalytisch wirksame Substanz Hämatit, Smektit, Magnetit, Anatas, Rutil, Goethit und/oder ein Spurenelement wie Kupfer, Nickel, Mangan, Titan, Zink, Chrom und/oder andere Schwermetalle und/oder Schwermetallkomplexe enthält.

10. Verwendung nach einem der Ansprüche 1 bis 9 mit der Maßgabe, daß ein mineralischer Stoff verwendet wird, der einen Anteil an Vulkangestein, mergeligem Kalkstein, Kalkmergel, Mergel, Tonmergel, mergeligem Ton, Zeolith und/oder Dolomit aufweist oder dieser Anteil zugemischt wurde.

11. Verwendung nach einem der Ansprüche 1 bis 10 zum Aufsaugen von fluiden Brenn- und Schmierstoffen wie Benzin und Öl.

## Claims

1. Use of a mineral material with the following features for absorption of toxic liquids, emulsions and suspensions:

1.1 the mineral material consists of clay and/or clay minerals from the kaolinite, illite, sericite and/or smectite group

1.2 the material has been burned at temperatures above 650°C, yet below the sinter temperature

1.3 the mineral displays an open porosity of at least 30 percent by volume, preferably 50 to 80 percent by volume

1.4 the median pore size is between 0,05 and 500 µm.

2. Use according to Claim 1 subject to the condition that a porosity increasing agent was added to the mineral material prior to burning.

3. Use according to Claim 2 subject to the condition that the porosity increasing agent consists of sawdust, aluminum, paper (pulp), rice husks, styrofoam, cork powder and/or low calcinated clay.

4. Use according to Claim 2 or 3 subject to the condition that the porosity increasing agent was added in a portion of between 5 and 30 percent by weight.

5. Use according to one of Claims 1 through 4 subject to the condition that the mineral material is provided in a granular fraction of between 0,5 and 10 mm.

6. Use according to Claim 5 subject to the condition that the mineral material is provided in a granular fraction of between 1 and 8 mm.

7. Use according to one of Claims 1 through 6 subject to the condition that the mineral material was burned at approx. 650°C, 750°C, 850°C, 950°C, 1050°C or 1150°C.

8. Use according to one of Claims 1 through 7 subject to the condition that a mineral material is used that contains at least one catalytically effective substance or such substance was added to the material.

9. Use according to Claim 8 subject to the condition that the catalytically effective substance contains hematite, smectite, magnetite, anatase, rutile, goethite and/or trace elements such as copper, nickel, manganese, titanium, zinc, chrome and/or other heavy metals and/or heavy metal complexes.

10. Use according to one of Claims 1 through 9 subject to the condition that a mineral material is used that displays a portion of volcanic rock, marly limestone, lime-marl, marl, clay-marl, marly clay, zeolite and/or dolomite or a portion of such was mixed into the material.

11. Use according to one of Claims 1 through 10 for the absorption of fluid fuels and lubricants such as gasoline and oil.

## Revendications

1. Utilisation d'une substance minérale, présentant les caractéristiques suivantes, pour absorber des liquides, émulsions et suspensions toxiques :

1.1 la substance minérale se compose d'argile et/ou de minéraux argileux, du groupe de la kaolinite, illite, sérizite et/ou smectite,

1.2 la substance est brûlée à une température supérieure à 650°C, mais inférieure à la température de frittage,

1.3 la substance présente une porosite ouverte d'au moins 30 % en volume, de préférence de 50 à 80 % en volume et

1.4 la taille moyenne de porosité est située entre 0,05 et 500 µm.

2. Utilisation selon la revendication 1, caractérisé en ce qu'un agent de porosité est ajouté à la substance minérale, avant la combustion.

3. Utilisation selon la revendication 2, caracterisé en ce que l'agent de porosité est composé de farine de sciage, aluminium, du papier (boue), des coques de riz, une matière synthétique alvéolaire, de la farine de liège et/ou de l'argile faiblement calcinée.

4. Utilisation selon la revendication 2 ou 3, caractérisé en ce que l'agent de porosité a été ajouté en une proportion située entre 5 et 30 % en poids.

5. Utilisation selon l'une des revendications 1 à 4, caractérisé en ce que la substance minérale se présente sous forme de fraction granulaire située entre 0,5 et 10 mm.

6. Utilisation selon la revendication 5, caractérisé en ce que la substance minérale se présente sous forme de fraction granulaire située entre 1 et 8 mm.

7. Utilisation selon l'une des revendications 1 à 6, caractérisé en ce que la substance minérale a été brûlée à une température d'à peu près 650°Celsius, 750°Celsius, 850°Celsius, 950°Celsius, 1050 °Celsius ou 1150°Celsius.

8. Utilisation selon l'une des revendications 1 à 7, caractérisé en ce qu'on utilise une substance minérale qui contient au moins une substance catalytiquement efficace ou celle-ci ayant été ajoutée à la substance.

9. Utilisation selon la revendication 8, caractérisé en ce que la substance catalytiquement efficace est l'hématite, la smectite, la magnétite, l'anatase, le rutile, la goethite et/ou contient un élément présent à l'état de trace, tel que le cuivre, le nickel, le manganèse, le titane, le zinc, le chrome et/ou d'autres métaux lourds et/ou complexes de métaux lourds.

10. Utilisation selon l'une des revendications 1 à 9, caractérisé en ce qu'on utilise une substance minérale qui présente une certaine proportion en pierre volcanique, roche calcaire marneuse, marne calcaire, marne, marne argileuse, argile marneuse, zéolithe et/ou dolomite ou que cette proportion a été ajoutée.

11. Utilisation selon l'une des revendications 1 à 10, pour absorber des substances fluides, combustibles et lubrifiantes, telle que de l'essence et de l'huile.